(19) Europäisches Patentamt
European Patent Office
Office européen des brevets

(11) **EP 1 740 339 B1**

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(21) Anmeldenummer: **05735078.7**

(22) Anmeldetag: **22.04.2005**

(51) Int Cl.:
***B23K 1/20*** *(2006.01)*

(86) Internationale Anmeldenummer:
**PCT/EP2005/004336**

(87) Internationale Veröffentlichungsnummer:
**WO 2005/107992 (17.11.2005 Gazette 2005/46)**

(54) **APPLIKATION VON HAFTMITTEL ZUR HERSTELLUNG EINER HOCHTEMPERATURFESTEN STRUKTUR**

APPLICATION OF ADHESIVE FOR PRODUCING A STRUCTURE THAT IS RESISTANT TO HIGH-TEMPERATURES

APPLICATION D'ADHESIF POUR REALISER UNE STRUCTURE QUI RESISTE AUX TEMPERATURES ELEVEES

(84) Benannte Vertragsstaaten:
**DE ES FR GB IT PL**

(30) Priorität: **29.04.2004 DE 102004021037**

(43) Veröffentlichungstag der Anmeldung:
**10.01.2007 Patentblatt 2007/02**

(73) Patentinhaber: **Emitec Gesellschaft für Emissionstechnologie mbH**
**53797 Lohmar (DE)**

(72) Erfinder: **ALTHÖFER, Kait**
**51674 Wiehl (DE)**

(74) Vertreter: **Rössler, Matthias et al**
**KNH Patentanwälte**
**Kahlhöfer Neumann Rößler Heine**
**Postfach 10 33 63**
**40024 Düsseldorf (DE)**

(56) Entgegenhaltungen:
**EP-A- 0 820 830     DE-A- 10 200 069**
**US-A- 5 224 644**

**Beschreibung**

Die vorliegende Erfindung betrifft ein Verfahren zur Herstellung von hochtemperaturfesten Strukturen gemäß dem Oberbegriff vom Anspruch 1. EP 1 603 560 B1 beschreibt ein solches Verfahren.

Aus metallischen Lagen gewickelte, geschichtete und/oder verwundene Wabenkörper sind in vielfältigen Formen bekannt. Eine frühe Bauform, für die die DE 2902779 A1 typische Beispiele zeigt, ist die Spiral-Bauform, bei der eine glatte und eine gewellte Blechlage aufeinandergelegt und spiralförmig aufgewickelt wird. Nach einer anderen Bauform wird der Wabenkörper aus einer Mehrzahl von abwechselnd angeordneten glatten und gewellten oder unterschiedlich gewellten Blechlagen aufgebaut, wobei die Blechlagen zunächst einen oder mehrere Stapel bilden, die miteinander verschlungen werden. Dabei kommen die Enden aller Blechlagen außen zu liegen und können mit einem Gehäuse verbunden werden, wodurch zahlreiche Verbindungen entstehen, die die Haltbarkeit des Wabenkörpers erhöhen. Typische Beispiele dieser Bauformen sind in der EP 0245737 B1 oder der WO 90/03220 beschrieben.

Um einen Wabenkörper herzustellen, müssen diese Lagen zumindest teilweise miteinander verbunden werden. Hierzu sind verschiedene Verbindungstechniken bekannt. Am Markt große Bedeutung haben Hartlötverfahren gewonnen, bei denen die Lagen zumindest in Teilbereichen miteinander hartgelötet werden. Hierzu ist es erforderlich, ein Lotmaterial, welches einen niedrigeren Schmelzpunkt als die Lagen aufweist, in den Wabenkörper einzubringen. Durch Erhitzen des Wabenkörpers über den Schmelzpunkt des Lotmaterials schmilzt das Lot auf und verbindet bei Abkühlung die Lagen miteinander.

Das Lotmaterial kann in unterschiedlichen Formen in den Wabenkörper eingebracht werden, beispielsweise als Lotfolie oder Lotpulver. Lotfolie wird in den Bereichen, in denen Lagen miteinander verbunden werden sollen, eingelegt oder - geklebt, während Lotpulver (zum Teil unter Einsatz eines zuvor applizieren Haftmittels) in bestimmten Teilbereichen des Wabenkörpers aufgetragen wird.

Wird das Lotpulver ohne Haftmittel in den Wabenkörper eingebracht, ist ein gezieltes Fixieren der Lotkörper in Teilabschnitten des Wabenköpers praktisch nicht möglich. Das bedeutet, dass für eine lokal inhomogene Verbindung der Lagen untereinander (also eine Verbindung, die in Strömungsrichtung und/oder im wesentlichen quer zur Strömungsrichtung nicht durchgängig ist) oder auch der Lagen mit einem den Wabenkörper umschließenden Mantelrohr das Auftragen eines Haftmittels nötig macht.

Zum Auftragen des Haftmittels sind verschiedene Techniken bekannt. Beispielsweise offenbart die EP 0422000 B2 den Auftrag eines Haftmittels mittels Walzen. Der Auftrag des Haftmittels erfolgt hier vor dem Wickeln bzw. Stapeln der Lagen. Weiterhin ist beispielsweise aus der DE 10151487 C1 bekannt, das Haftmittel in flüssiger Form unter Ausnutzung von Kapillarkräften bekannt. Hierbei wird der Wabenkörper nach dem Wickeln oder Stapeln und Verwinden der Lagen mit einem flüssigen Haftmittel in Kontakt gebracht, welches durch die Kapillarkräfte in die durch die Kontaktbereiche von Glatt- und Welllagen gebildeten Kapillaren aufsteigt.

Weiterhin geht aus der EP 0 820 830 A ein Verfahren zur Herstellung eins Auspuffreinigungsmetallträgers mit einer Einrichtung zum Auftragen von Lötmittel hervor. In diesem Zusammenhang wird vorgeschlagen, dass ein Brei, der pulverförmiges Lötmittel und ein Bindemittel enthält, mittels einer geeigneten Zuführungseinrichtung auf die Wellen eines Bleches aufgetragen wird. Danach wird der an den Scheiteln bzw. Spitzen der Wellung aufgetragene Brei mittels einer Bürste oder Walze in der Querrichtung und Längsrichtung des Bleches verteilt, so dass eine gleichmäßig Beschichtungsdicke erzielt wird. Dies schränkt einerseits den Ablauf des Herstellungsverfahrens ein, weil die Zugänglichkeit zum applizierten Brei auf dem Blech gegeben und die Handhabung des beschichteten Bleches berücksichtigt werden muss, und führt gleichwohl zu relativ ungenauen Lötmustern, weil dieser Brei auf einer unebenen Fläche verschmiert wird. Die hier beschriebenen Verfahren sind für eine Vielzahl von unterschiedlichen Anwendungsfällen gut geeignet, ist jedoch eine besonders präzise und exakt definiere Lötanbindung gewünscht, können allerdings technische Schwierigkeiten auftreten. So ist der Auftrag des Haftmittels mittels Walzen relativ aufwendig, zudem ist insbesondere die relative Positionierung der Walzen in Bezug auf die mit Haftmittel zu versehenden Lagen fehleranfällig. Weiterhin erlaubt die Einbringung des Haftmittels mittels Kapillarkräften keine selektive Verbindung von benachbarten Lagen nur in Teilbereichen in einem genügend flexiblen Masse.

Hiervon ausgehend ist es Aufgabe der vorliegenden Erfindung, ein Verfahren anzugeben, welches die technischen Probleme bekannter Verfahren zur Herstellung von hochtemperaturfesten Strukturen zumindest mindert. Insbesondere soll ein Verfahren angegeben werden, das ein präzises Beloten der Struktur ermöglicht. Dabei sollen auch die Kriterien einer zumindest halbautomatischen Serienfertigung berücksichtigt werden. Letztendlich soll damit auch eine hochtemperaturfeste Struktur bereitgestellt werden können, die den beträchtlichen thermischen und dynamischen Beanspruchungen beispielsweise im Abgassystem mobiler Verbrennungskraftmaschinen dauerhaft standhält. Auch unter Kostengesichtspunkten soll eine effektive Nutzung von Lotmaterial begünstigt werden. Zudem ist auch gewünscht, dass im Vergleich mit ähnlichen bekannten Verfahren weniger Energie zur Durchführung des Verfahrens erforderlich ist.

Diese Aufgaben werden gelöst durch das Verfahren mit den Merkmalen des unabhängigen Patentanspruchs. Weitere vorteilhafte Ausgestaltungen des Verfahrens sind Gegenstand der abhängig formulierten Patentansprüche. Dabei sei darauf hingewiesen, dass die dort genannten Merkmale beziehungsweise Verfahrensschritte in beliebiger, technologisch sinnvoller Weise miteinander kombiniert werden können, wobei weitere Ausgestaltungen des erfindungsgemäßen Verfahrens aufgezeigt sind.

Das hier vorgeschlagene Verfahren zur Herstellung einer hochtemperaturfesten Struktur, welche mindestens eine wenigstens teilweise strukturierte metallische Lage umfasst, weist zumindest folgende Schritte auf:

(a) Auftragen eines Haftmittels auf wenigstens einen Verbindungsabschnitt der mindestens einen Lage, wobei das Haftmittel zur Ausbildung einer Haftschicht tropfenförmig appliziert wird, so dass eine Schichtdicke der Haftschicht kleiner 0,05 mm (Millimeter) bereitgestellt wird;
(b) zumindest teilweises Formen der Struktur;
(c) Applizieren eines Lotmaterials, so dass dieses zumindest teilweise an einer Haftschicht fixiert wird;
(d) Durchführen einer thermischen Behandlung,

wobei Schritt (c) nach Schritt (a) durchgeführt wird.

Unter einem Haftmittel wird insbesondere eine Substanz verstanden, die dazu geeignet ist, Lotmaterial (zumindest vorübergehend) zu fixieren, bis dieses bei der schließlich durchgeführter thermischen Behandlung aufgeschmolzen wird. Diese Haftmittel weisen üblicherweise die Fähigkeit auf, andere Körper (hier die Lage und das Lotmaterial) durch starke Oberflächenhaftung (Adhäsion) und starken inneren Zusammenhalt (Kohäsion) zu verbinden.

Gemäß Schritt (a) wird dieses Haftmittel nun auf wenigstens einen Verbindunganschnitt aufgetragen. Der Verbindungsabschnitt ist der Bereich, der für die Bereitstellung von Haftmittel auf der Lage vorgesehen ist. Der Verbindungsabschnitt kann sich beispielsweise in Form eines Streifens oder in ähnlicher Weise über einen größeren Abschnitt der Lage erstrecken, es ist jedoch auch möglich, dass der Verbindungsabschnitt nur lokal eng begrenzte Teilbereiche (z.B. mit einer Fläche kleiner 20 mm$^2$ oder sogar kleiner 10 mm$^2$ bzw. kleiner 5 mm$^2$) der Lage meint. Der Verbindungsabschnitt ist somit nicht zwangsläufig mit dem Bereich gleichzusetzen, in denen letztendlich die fügetechnische Verbindung der Lagen generiert wird. Die Verbindungsabschnitte können zumindest bereichsweise zueinander versetzt angeordnet sein. Damit ist insbesondere gemeint, dass die Verbindungsabschnitte benachbart zueinander angeordneter Lagen des Wabenkörpers zum Beispiel nicht in radialer und/oder axialer Richtung hintereinander angeordnet sind. Es ist weiterhin möglich, dass die Verbindungsabschnitte in einem Querschnitt des Wabenkörpers nach Art eines Schachbretts angeordnet sind, wobei in Richtung des Verlaufs der Lage und/oder senkrecht dazu Kontaktstellen der aneinanderliegenden Lagen, insbesondere wiederholt, keine Verbindungsabschnitte vorgesehen, sind. Ganz besonders bevorzugt ist es, dass ein solches VerbindungMuster über die Länge des Wabenkörpers nicht gleich ist, sondern mindestens zwei voneinander beabstandete Querschnitte vorliegen, die voneinander verschiedene Verbindungs-Muster aufweisen.

Die ausgebildete Haftschicht wird demgemäß durch einen tropfenförmigen Auftrag des Haftmittels bereitgestellt. Das hat den Vorteil, dass das Applizieren ohne einen mechanischen Kontakt zwischen dem Mittel zum Auftragen des Haftmittels und der Lage selbst durchgeführt werden kann. Damit werden einerseits mechanische Beschädigungen der Lage vermieden, gleichzeitig ist es auf diese Weise möglich, eine exakt dosierte, vorgegebene kleine Menge des Haftmittels auf der Lage anzuordnen. So wird hier gleichzeitig die Möglichkeit geschaffen, besonders dünne Schichtdicken der Haftschicht bereitzustellen, insbesondere kleiner 0,05 mm. Die sehr geringe Schichtdicke eröffnet nun die Möglichkeit, über die Haftwirkung des Haftmittels selbst einzustellen, da die Kontaktfläche bzw. die Eindringtiefe des eingesetzten Lotmaterials beeinflussbar wird. Die tropfenförmige Bereitstellung des Haftmittels erlaubt dabei noch deutlich dünnere Schichtdicken. So wird auch vorgeschlagen, dass die Schichtdicke noch deutlich kleiner ausgeführt ist, z.B. kleiner 0,01 mm, 0,001 mm (1 $\mu$m), insbesondere kleiner 0,0005 mm (0,5 $\mu$m), oder sogar kleiner 0,0001 mm (0,1$\mu$m). Die erzielbaren Schichtdicken hängen in gewisser Weise auch mit dem eingesetzten Haftmittel zusammen; so lassen sich extrem dünne Haftschichten beispielsweise mit solchen herstellen, die einen hohen Lösungsmittelanteil aufweisen (z.B. größer 50%). Solche extrem dünnen Schichtdicken waren zuvor nicht im Rahmen einer Serienfertigung zu realisieren. Das Auftragen mit mechanischen Mitteln würde häufig zur Zerstörung der Haftmittelschicht führen bzw. würde zumindest erheblichen Zeit- und Kostenaufwand erfordern.

Gemäß Schritt (b) wird nach dem Auftragen des Haftmittels zumindest teilweise die Struktur geformt. Damit ist insbesondere gemeint, dass eine Mehrzahl von Lagen gestapelt werden, so dass diese Strömungskanäle bilden, die von üblicherweise zumindest zwei benachbarten Lagen begrenzt werden. Dazu können die Lagen auch miteinander verbunden beziehungsweise gewickelt werden, so dass letztendlich eine Art Wabenstruktur entsteht. Dabei ist es nicht zwangsläufig erforderlich, die endgültig gewünschte Form der Struktur bereits in diesem Verfahrensstadium auszubilden, vielmehr ist auch möglich, dass das Formen der Struktur unterbrochen wird, und weitere Verfahrensschritte durchgeführt werden, beispielsweise erneut Schritt (a) und/oder bereits Schritt (c).

Mit dem Verfahrensschritt (c) wird nun Lotmaterial appliziert, so dass dieses zumindest teilweise an der Haftschicht fixiert wird. Dabei ist anzumerken, dass der Schritt (c) auch wenigstens teilweise direkt nach Schritt (a) durchgeführt werden kann, der Auftrag des Lotmaterials also schon vor dem zumindest teilweisen Formen der Struktur stattfindet. Die Bereitstellung des Lotmaterials kann auf alle bekannten Arten stattfinden, bevorzugt wird das Lotmaterial jedoch mit einem Trägerstrom (beispielsweise Luft) durch die Struktur hindurch befördert, wobei es mit den Lagen und damit auch mit der Haftschicht in Kontakt kommt. Trifft das Lotmaterial auf eine solche Haftschicht, bleibt dieses dort in der Regel haften. Das Lotmaterial, welches beim Durchströmen durch die Struktur nicht mit Haftmitteln in Kontakt kommt, wird wieder aufgefangen, gegebenenfalls gereinigt und dem Verfahren erneut zugeführt, um ein umweltschonendes und kostengünstiges Verfahren bereitzustellen. Nun befindet sich die gewünschte Menge des Lotmaterials in den vorgesehenen Verbindungsabschnitten zwischen benachbart zueinander angeordneten Teilabschnitten der Lage beziehungsweise den Lagen. Diese Menge des Lotmaterials wurde festgelegt unter Berücksichtigung der erforderlichen Dauerfestigkeit unter thermischer und/oder dynamischer Wechselbeanspruchung, wie sie beispielsweise in Abgassystemen mobiler Verbrennungskraftmaschinen stattfindet. Außerdem ist berücksichtigt, dass diese Lotmenge bei der thermischen Behandlung keine (z.B. chemische) Materialveränderung der metallischen Lage zur Folge hat, diese also beispielsweise dauerhaft korrosionsbeständig bleibt.

Im Verfahrensschritt (d) wird das Lotmaterial nun aufgeschmolzen und generiert schließlich beim Abkühlen fügetechnische Verbindungen, so dass z.B. die Mehrzahl von Lagen unverlierbar miteinander verbunden sind. Bei der thermischen Behandlung handelt es sich bevorzugt um einen Hochtemperatur-Vakuum-Prozeß. Wird die Struktur einer erhöhten Temperatur ausgesetzt, so beginnen zunächst bestimmte Anteile des Haftmittels ihren Aggregatzustand zu verändern, insbesondere sich zu verflüchtigen. Schließlich verflüchtigt sich nahezu das gesamte Haftmittel, so dass die Verbindung im wesentlichen ausschließlich durch das dort vorgesehene Lotmaterial generiert wird. Bevorzugt wird diese thermische Behandlung in einem Lötofen durchgeführt, es ist jedoch auch möglich, ein Aufheizen durch induktives Löten und/oder Strahlungslöten und/oder auch durch die Abwärme eines Schweißvorgangs zu erreichen.

Gemäß einer bevorzugten Ausgestaltung des Verfahrens wird das Haftmittel mittels einem der nachfolgenden Verfahren aufgedruckt:

- Drop-on-Demand-Verfahren;
- Bubble-Jet-Verfahren;
- Continuous-Jet-Verfahren.

Die vorstehend genannten Verfahren dienen insbesondere der Separierung beziehungsweise Bildung von Tropfen aus einem Flüssigkeitsreservoir und zur gezielten Positionierung des Tropfens bzw. zum gerichteten Transport des Tropfens hin zu einer Zielstelle.

"Drop-on-Demand"-Verfahren sind Druckverfahren, die sich dadurch auszeichnen, dass ein Tropfen des Haftmittels nur dann erzeugt wird, wenn dieser tatsächlich benötigt wird. Damit erstellt es quasi ein diskontinuierliches Bereitstellungsverfahren für Haftmitteltropfen dar. Das heißt mit anderen Worten, dass das Applizieren des Haftmittels derart erfolgt, dass eine Relativbewegung zwischen Lage und der Vorrichtung zur Durchführung des Drop-on-Demand-Verfahrens realisiert wird, wobei diese Vorrichtung nur genau dann Tropfen generiert und emittiert, wenn sich diese im Bereich eines gewünschten Verbindungsabschnittes befindet. Für den Fall, dass diese Vorrichtung außerhalb des Verbindungsabschnittes positioniert ist, werden keine Tropfen generiert und emittiert.

Bei Drop-on-Demand-Systemen ist es beispielsweise möglich, einzelne Tropfen des Haftmittels mittels piezoelektrischer Aktoren zu erzeugen. Bei piezoelektrischen Aktoren handelt es sich um elektromechanische Wandler, die auf dem piezoelektrischen Effekt beruhen. Hierbei führt das Anlegen einer Wechselspannung an das piezoelektrische Element zu mechanischen Schwingungen. Diese Schwingung wird auf ein vorgegebenes Haftmittelvolumen übertragen, wobei sich an einem Auslass jeweils ein Tropfen bildet, der anschließend mit einer relativ hohen Geschwindigkeit einer Düse zugeführt wird. Es sind mehrere Drop-on-Demand-Verfahren bekannt, die piezoelektrischen Wandlern beruhen, beispielsweise Piezoröhrchen, Piezoscheiben, Piezolamellen.

Ein bevorzugtes Drop-on-Demand-Verfahren stellt das "Bubble-Jet"-Verfahren dar. Hierbei werden die Haftmitteltropfen nicht mittels eines piezoelektrischen Wandlers erzeugt, sondern durch Einsatz von thermischen Aktoren. Diese sind in der Regel Heizelemente, die in einer Düse ausgebildet und mit dem Haftmittel verbunden sind. Durch diese Heizelemente wird kurzzeitig in der Düse ein lokal begrenzter Bereich auf eine sehr hohe Temperatur gebracht, die deutlich über der Siedetemperatur des Haftmittels liegt. Das Haftmittel beginnt dann lokal zu sieden, wodurch sich nach sehr kurzer Zeit eine geschlossene Dampfblase bildet. Diese Dampfblase treibt einen Tropfen des Haftmittels aus der Düse, wobei Drücke von 10 bar oder mehr und Austrittsgeschwindigkeiten von 10 m/s (Meter pro Sekunde) und mehr erreicht werden können. Diese Dampfblase kollabiert anschließend, worauf es aufgrund der Kapillarkräfte zum Nachsaugen von Haftmittel in der Düse kommt. Bei solchen Bubble-Jet-Verfahren werden verschiedene Drucktechniken unterschieden, die allgemein als "Edge-" und "Sides-Hooter" bekannt sind.

Neben diesen Drop-on-Demand-Verfahren existieren auch kontinuierliche Druckverfahren, bei denen ein kontinuierlicher Strahl von Haftmitteltropfen erzeugt wird, der dann wenn Tropfen benötigt werden, die Vorrichtung verlässt, und sonst so abgelenkt wird, dass die generierten Tropfen in einen Auffangbehälter geführt werden und somit nicht die zu bedruckende Oberfläche erreichen. Ein solches Verfahren stellt auch das "Continuous-Inkjet"-Verfahren bzw. hier als "Continuous-Jet-Verfahren" bezeichnetes Verfahren dar, wobei der kontinuierliche Strahl von Tropfen durch Positionierung des Druckkopfes und/oder elektrostatischer Ablenkung mit einer gewünschten Strahlrichtung generiert wird. Wenn ein solches Continuous-Jet-Verfahren zum Auftragen von Haftmittel verwendet wird, wird ein kontinuierlicher Stahl von Haftmitteltropfen erzeugt, welcher in ein Fangrohr gerichtet ist, das das Haftmittel schließlich wieder dem Reservoir zuführt. Soll nun der Strahl auf die vorgegebenen Verbindungsabschnitte gerichtet werden, erfolgt eine Ablenkung des Tropfenstrahles im Inneren des System, so dass der Strahl die Vorrichtung verlässt und auf dem gewünschten Verbindungsabschnitt auftrifft.

Das Auftragen des Haftmittels mittels den oben genannten Verfahren führt dazu, dass besonders kleine Tropfen mit sehr hoher Geschwindigkeit und sehr präzise auf der Lage appliziert werden können. So ist beispielsweise eine Generierung eines Tropfens mit einer Frequenz von ca. 50 kHz (50.000 Tropfen pro Sekunde), gegebenenfalls sogar mit noch höherer Frequenz. Solche hochfrequenten Vorgänge haben hohe Fertigungsgeschwindigkeiten zur Folge, die sich gerade im Hinblick auf eine Serienfertigung derartiger Strukturen vorteilhaft bemerkbar machen.

Entsprechend einer Weiterbildung des Verfahrens ist das Haftmittel statisch aufladbar und weist bevorzugt eine elektrische Leitfähigkeit auf, die größer 1,0 mS (milli Siemens) beträgt. Bevorzugt beträgt die elektrische Leitfähigkeit dabei höchstens 5,0 mS und insbesondere höchstens 2,0 mS. Durch das statische Aufladen des Haftmittels wird ermöglicht, dass eine Ablenkung des generierten Haftmittel-Tropfenstrahls durch ein elektrisches Feld stattfinden kann. Das hat zur Folge, dass es nicht zwingend erforderlich ist, die Vorrichtung zur Durchführung des tropfenförmigen Auftrages selbst relativ zur Lage bewegt werden muss, vielmehr kann der gebildete Strahl selbst verschwenkt beziehungsweise abgelenkt werden. Zusätzlich eröffnet sich die Möglichkeit, bei einer kontinuierlichen Bereitstellung eines Tropfenstrahles eine Ablenkung genau dann zu bewirken, wenn die Tropfen in einen Auffangbehälter geleitet werden sollen, weil außerhalb der Vorrichtung kein Bedarf an Haftmitteltropfen besteht.

Gemäß einer weiteren Ausgestaltung des Verfahrens wird Haftmittel eingesetzt, welches eine dynamische Viskosität im Bereich von 3,0 bis 5,0 mPa (milli Pascal) aufweist. Bevorzugt liegt die dynamische Viskosität in einem Bereich von 3,5 bis 4,5 mPa. Unter einer Viskosität wird insbesondere die Zähigkeit des Haftmittels verstanden. Bestimmt kann sie beispielsweise dadurch werden, dass ein fester Körper mit einer Geschwindigkeit durch die ruhende Haftmittelflüssigkeit hindurch bewegt wird, wobei dann im allgemeinen zur Aufrechterhaltung der Bewegung eine Kraft erforderlich ist, die von der Größe und Form des Körpers und eine Eigenschaft der Flüssigkeit, der dynamischen Viskosität, abhängt. Die Bestimmung der dynamischen Viskosität stellt für den Fachmann keine Probleme dar, wobei die hier angegebenen Werte für die Raumtemperatur und den Atmosphärendruck gelten. Die dynamische Viskosität ist vor allem für die Tropfenbildung im Inneren der Vorrichtung zum Auftragen des Haftmittels von Bedeutung. Liegt die dynamische Viskosität in dem angegebenen Bereich ist sichergestellt, dass ein ausreichendes Fließverhalten vorliegt, wobei die Tropfen nach einer Aufladung sich abtrennen und somit ihre Ladung behalten. Dies gewährleistet die später folgende Ablenkung der Tropfen.

Weiter wird auch vorgeschlagen, dass das Haftmittel einen Lösungsmittelanteil hat, der mindestens 50 % beträgt. Bevorzugt beträgt dieser Lösemittelanteil mindestens 70 %, insbesondere 90 % und ganz besonders bevorzugt mindestens 98 %. Als Lösungsmittel kommen bevorzugt dünnflüssige, polarisierbare Lösungsmittel zum Einsatz, insbesondere Aceton und/oder Ethanol.

Zudem wird vorgeschlagen, dass das Haftmittel einen Klebstoffanteil hat, der bis mindestens 300°C (Grad Celsius) beständig ist. Dadurch soll gewährleistet werden, dass die Hafteigenschaft des Haftmittels bis zu mindestens dieser Temperatur vorliegt. So können beispielsweise thermische Vorbehandlungsmaßnahmen getroffen werden, und das Lotmaterial bleibt dennoch bis zur abschließenden thermischen Behandlung an dem gewünschten Verbindungsabschnitt haften. Dabei ist besonders bevorzugt, dass eine gleich bleibende Hafteigenschaft bis ca. 150°C vorliegt, darüber hinaus kann sich diese jedoch verändern. Maßgeblich ist, dass bei 300°C noch eine solche Hafteigenschaft vorliegt, dass das Lotmaterial daran haften bleibt. Das Haftmittel kann neben dem polarisierenden Lösungsmittel, insbesondere Wasser oder organische Lösungsmittel, auch andere Bestandteile aufweisen, z.B. Harze, Härter, Füllstoffe, Zusätze wie Weichmacher, Verdickungsmittel, Konservierungsstoffe, etc..

Weiter wird auch vorgeschlagen, dass die Struktur vor dem Applizieren des Lotmaterials einer thermischen Vorbehandlung unterzogen wird. Damit ist insbesondere gemeint, dass diese thermische Vorbehandlung vor wenigstens einem der Schritte (c), (b), (a) durchgeführt wird. Die thermische Vorbehandlung umfasst insbesondere ein Reinigen der Lage, beispielsweise von flüchtigen Bestandteilen, die sich auf den Seiten bzw. der Oberfläche der Lage gebildet haben. Diese Verunreinigungen, Betriebsmittel, etc. könnten das Auftragen des Haftmittels bzw. das Applizieren des Lotmaterial negativ beeinträchtigen. Im Hinblick auf das Haftmittel könnte die Adhäsionswirkung hin zur Lage gestört werden. Außerdem ist auch möglich, dass diese Verunreinigungen ebenfalls eine Haftwirkung gegenüber dem verwendeten Lotmaterial haben, so dass ungewünschte Lotverbindungen entstehen würden. Zudem ist zu berücksichtigen, dass gerade bei der Ausgestaltung der abschließenden thermischen Behandlung als Vakuumprozess die flüchtigen Bestandteile eine Störung des Vakuums zur Folge haben können. Deshalb wird hier vorgeschlagen, im Rahmen einer thermischen Vorbehandlung zumindest die flüchtigen Bestandteile von der Lage zu entfernen. Dieses thermische Reinigen findet beispielsweise bei Temperaturen im Bereich oberhalb von 200°C statt, insbesondere im Bereich von 250°C bis 350°C. Wird diese thermische Vorbehandlung nach Schritt (a) durchgeführt, so können gleichzeitig die Lösungsmittelbestandteile des Haftmittels entfernt werden, so dass diese flüchtigen Bestandteile ebenfalls den nachgeschalteten thermischen Fügeprozess nicht behindern. In Anbetracht der Tatsache, dass die Betriebsmittel zum Teil dafür eingesetzt werden, dass ein betriebssicheres Formen der Struktur gewährleistet ist, wird die thermische Vorbehandlung bevorzugt zwischen Schritt (b) und (c) durchgeführt.

Gemäß einer vorteilhaften Weiterbildung des Verfahrens wird das Haftmittel mit mindestens einer Düse appliziert, wobei die mindestens eine Düse einen Strahlwinkel vorgibt und einen Abstand zum Verbindungsabschnitt aufweist, wobei zur Ausbildung einer Haftschicht mindestens einer der Parameter Strahlwinkel und Abstand so variiert wird, dass die Haftschicht mit einer vorgegebenen Schichtdicke und/oder Schichtausdehnung erzeugt wird.

Bei dem vorgenannten Verfahren wird das Ziel verfolgt, bei Bereitstellung der gleichen Tropfengröße beziehungsweise des gleichen Haftmittelvolumens pro Tropfen allein durch Variierung des Abstandes und/oder des Strahlwinkels unterschiedliche Fläche der Lage zu benetzen. Der "Abstand" beschreibt dabei im wesentlichen die Länge der freien Flugbahn des Haftmitteltropfens vom Austritt aus der Düse bis zum Auftreffen auf der Lage. Mit "Strahlwinkel" ist der Winkel gemeint, der zwischen einer Senkrechten durch den Verbindungsabschnitt und der Auftreffrichtung des Tropfens gebildet wird. Die Variierung dieses Strahlwinkels hat eine unterschiedliche Ausgestaltung des Tropfens beim Kontakt mit der Lage zur Folge. Erfolgt das Auftragen des Haftmittels parallel zur Senkrechten, also mit einem Strahlwinkel von 0° (Grad), so wird sich bei einer ebenen Gestaltung des Verbindungsabschnittes ein im wesentlicher runder Auftrefffleck ausbilden. Für den Fall, dass beispielsweise eine schräge Auftreffrichtung bzw. ein Strahlwinkel, insbesondere größer 45° zur Senkrechten gewählt wird, bildet sich ein im wesentlichen ovaler bzw. unsymmetrischer Auftrefffleck aus. Damit ist es möglich, durch eine schräge Besprühung der Lage eine größere Fläche des Verbindungsabschnittes mit Haftmittel zu benetzen. Dies führt gleichzeitig zu einer reduzierten Schichtdicke, da pro Tropfen das gleiche Volumen bzw. die gleiche Masse bereitgestellt wird. Die Düsen haben dabei vorzugsweise einen Durchmesser von 0,5 bis 0,6 mm. Auf der Lage bzw. in dem Verbindungsabschnitt werden so Auftreffflecke der Größe etwa 0,05 bis 0,7 mm erzeugt, insbesondere im Bereich von 0,1 bis 0,5 mm und bevorzugt im Bereich von 0,2 bis 0,3 mm.

Einer weiteren Ausgestaltung des Verfahrens zur Folge wird Lotmaterial als Pulver mit einer Kornfraktion kleiner 120 $\mu$m (Mikrometer) appliziert. Bevorzugt wird dabei eine Kornfraktion eingesetzt, die eine durchschnittliche Größe kleiner 106 $\mu$m aufweist, insbesondere in einem Bereich von 63 bis 106 $\mu$m, einem Bereich von 36 bis 75 $\mu$m, einem Bereich von 40 bis 60 $\mu$m oder einem Bereich von 60 bis 80 $\mu$m. Als Lot wird bevorzugt ein Nickel-Basis-Lot eingesetzt. Die Wahl der geeigneten Kornfraktion ist insbesondere mit der ausgebildeten Haftschicht abzustimmen. Die verschiedenen Lot-Kornfralctionen stellen jeweils unterschiedliche Umfangsflächen bereit, die schließlich die Haftung im Verbindungsabschnitt beeinflussen. Die Umfangsflächen und die Massen der Lotkornpulver sind also mit Berücksichtigung der vorgegebenen bzw. gewünschten Verbindung und die ausgebildete Haftmittelschicht auszuwählen.

Wird die Struktur mit mindestens einer glatten Folie und einer gewellten Folie einer vorgegebenen Foliendicke gebildet, welche miteinander Kontaktstellen mit Zwickeln formen, so wird vorgeschlagen, dass eine Menge Lotmaterial appliziert wird, die in Abhängigkeit der Foliendicke in einem Zwickel mindestens folgendem Zusammenhang entspricht:

$$m_{Lot} = \delta_{Lot} \cdot \frac{d_{Lot}^2 \cdot s}{2} \cdot \frac{l}{d_{Lot}};$$

mit

$m_{Lot}$:　　erforderliche Lotmasse,
$\delta_{Lot}$:　　Lotmaterialdichte,
$d_{Lot}$:　　gemittelter Durchmesser des pulverförmigen Lotmaterials,
s:　　Foliendicke,
l:　　Länge des Haftmittelstreifens.

Die hier angegebene Menge $m_{Lot}$ beschreibt die minimal erforderliche Menge des Lotmaterials zur Gewährleistung einer dauerhaften Verbindung. Üblicherweise sollte dieser Minimalwert nicht um mehr als das 5fache, insbesondere nicht als das 3fache oder sogar nur das 2fache, überschritten werden.

Die hier beschriebene Struktur weist mindestens eine glatte Folie und eine gewellte Folie auf. Beide sind bevorzugt aus einem hochtemperaturfesten metallischen Material, welches insbesondere Aluminium und/oder Chrom enthält. Die Foliendicke zumindest einer der Folien liegt bevorzugt in einem Bereich kleiner 130 $\mu$m, insbesondere kleiner 60 $\mu$m. Wird eine solche gewellte Folie auf eine glatte Folie gelegt, so bilden sich Kontaktstellen entlang der Extrema der gewellten Folie aus. Direkt benachbart zu dieser Kontaktstelle sind Zwickel (hier als Oberbegriff für Einbuchtungen, Spalte, etc. gemeint) geformt. Je nach Ausgestaltung der Extrema öffnen sich diese Zwickel sehr schnell oder sind relativ flach ausgebildet. Diese Zwickel stellen den Raum für die letztendlich ausgebildeten Lotverbindungen bereit. Nun wird vorgeschlagen, dass nur eine ganz bestimmte Menge Lotmaterial in diesen Zwickeln vorgesehen ist.

Bei einer Ausgestaltung der Struktur mit mindestens einer glatten Folie und einer gewellten Folie wird auch vorgeschlagen, dass die mindestens eine gewellte Folie mittels einem formgebenden Walz-Verfahrens unter Einsatz eines Öls hergestellt wird, bei dem die hergestellte gewellte Folie entölt wird, bevor das Haftmittel aufgetragen wird. Die Herstellung einer gewellten Folie aus einer glatten Folie mittels einem formgebenden Walz-Verfahren gehört zur üblichen Blechbearbeitung in diesem technischen Gebiet. Der Einsatz des Öls gewährleistet, dass die Walzen bei der Formgebung gut auf der Oberfläche abrollen und somit die Folie nicht beschädigen. Da dieses Öl unter Umständen den weiteren Verfahrensablauf des hier beschriebenen Verfahrens beeinträchtigt, soll das Öl entfernt werden, bevor das Haftmittel aufgetragen wird. Das Entfernen kann thermisch, mechanisch und/oder chemisch erfolgen. Beim Einsatz leicht flüchtiger Öle ist es unter Umständen ausreichend, eine entsprechend große Verflüchtigungs-Transportstrecke vorzusehen, so dass zu dem Zeitpunkt, wenn die Folie mit dem Haftmittel benetzt werden soll, wenigstens ein Großteil des Öls bereits verflüchtigt ist.

Außerdem wird auch vorgeschlagen, dass bei einer Struktur, die mit mindestens einer glatten Folie und einer gewellten Folie gebildet wird, die gewellte Folie Extrema aufweist, wobei neben mindestens einem Extremum verlaufend, zumindest eine Haftschicht mit einer Distanz von mindestens 0,05 mm (Millimeter) erzeugt wird. Mit Extrema sind insbesondere die Hochpunkte beziehungsweise Tiefpunkte der Struktur gemeint, beispielsweise die Berge und Täler einer wellenförmigen Struktur. Diese Extrema verlaufen in der Regel gradlinig, weisen also eine Art Scheitellinie auf. Mit dem hier vorgeschlagenen Verfahren ist es nun möglich, besonders dicht an dieses Extremum heran solche Haftschichten auszubilden, wobei gleichzeitig verhindert wird, dass das Extremum selbst, das schließlich die Kontaktstelle zu benachbarten Folien bildet, frei von Haftmitteln ist. Die vorgeschlagene Distanz hat auch zur Folge, dass in direkter Nachbarschaft der Extrema kein Haftmittel platziert wird, welches von dem Lotmittel aufgrund der Kornfraktion nicht erreicht werden kann. Dies erlaubt beispielsweise auch beim Formen der Struktur ein Aufeinandergleiten der Folie, weil im Bereich der Kontaktstellen kein Haftmittel vorliegt. Bevorzugt liegt die Distanz in einem Bereich von 0,05 bis 0,1 mm. Dabei wird insbesondere die Begrenzung der Haftschicht herangezogen, die dem Extremum am nächsten ist.

In diesem Zusammenhang ist es besonders vorteilhaft, wenn die Haftschicht eine Schichtbreite kleiner 0,9 mm (Millimeter) hat. Insbesondere liegt die Schichtbreite in einem Bereich von 0,15 mm bis 0,3 mm. Mit derartig präzise positionierten und schmal ausgebildeten Haftschichten lässt sich das Lotmaterial sogar teilweise bis auf das Korn genau in einem Zwickel applizieren. Dies ermöglicht eine bislang nicht verfügbare Präzision der Verbindungstechnik im Bereich der Herstellung von Wabenkörper für Abgasbehandlungsanlagen.

Gemäß einer Weiterbildung des Verfahrens zur Herstellung einer Struktur mit mindestens einer glatten Folie und einer gewellten Folie, wobei die gewellte Folie Extrema aufweist, wird vorgeschlagen, dass zumindest die Anzahl oder die Lagen de Extrema erfasst werden. Bevorzugt werden sowohl die Anzahl als auch die Lage der Extrema erfasst. Das bedeutet zunächst einmal, dass Zähl- oder Überwachungsvorrichtungen vorgesehen sind, die die Lage der Extrema erkennen beziehungsweise registrieren. Dies wird bevorzugt über den gesamten Herstellungsprozess verfolgt. Damit wird die Möglichkeit geschaffen, die Haftschichten ganz bestimmten Extrema zuzuordnen, so dass eine Vielzahl unterschiedlicher Muster auf die Folien aufgetragen werden können. Es ist auch möglich, somit in der hergestellten Struktur dreidimensionale Muster zu generieren, wobei die Struktur in ganz bestimmten Bereichen unterschiedliche Lotverbindungen ausbildet, bzw. Teilvolumina ohne Lotverbindungen vorgesehen sind. Das Erfassen der Extrema kann beispielsweise durch die formgebenden Walzen, zusätzliche Sensoren oder andere hierfür geeignete Mittel erfolgen.

Bei der Überwachung bzw. Regelung des Herstellungsvorgangs einer Folie, insbesondere der Erzeugung einer Haftschicht und/oder des Belotens kann es vorteilhaft sein, ein Haftmittel einzusetzen, dessen Lage, Position und/oder Gestalt messtechnisch erfassbar ist. Damit ist insbesondere gemeint, dass das Haftmittel Mittel umfasst, die eine optische Detektierung ermöglichen. So kann beispielsweise eine spezielle Farbe bzw. Einfärbung vorliegen, die die automatische Erkennung der Haftschicht mittels Messwerterfassungseinheiten, insbesondere Sensoren, gewährleisten. Weist das Haftmittel eine solche Farbe auf, kann das Haftmittel z.B. mittels einer Stroboskopanstrahlung und einer erfassten, veränderter Reflexion an der Oberfläche der Folie identifiziert werden. Weiter ist auch möglich, dass zur Detektierung der Haftschicht die unterschiedliche Brechung eines auf die Folie gerichteten Lichtstrahles herangezogen wird. Dies unterscheidet sich beispielsweise erkennbar, wenn eine trockene oder eine mit Haftmittel benetzte Oberfläche (z.B. mit einem Laser) abgetastet wird. Die erhaltenen Messwerte können einer übergeordneten Regeleinheit zugeführt werden, so dass diese Aussagen über die Art bzw. Qualität der hergestellten Folien erlauben bzw. eine Variierung oder Anpassung der Prozessparameter vornehmen kann. Dieses Verfahren kann selbstverständlich auch noch nach dem Beloten durchgeführt werden, wobei sich unter Umständen sogar Rückschlüsse auf die Belotungsmenge ziehen lassen.

Einer bevorzugten Ausgestaltung des Verfahrens zur Folge wird eine Struktur mit mindestens einer glatten Folie und einer gewellten Folie gebildet, wobei folgende Schritte durchgeführt werden:

- Kontinuierliches Erzeugen einer Wellung in einer glatten Folie infolge Hindurchführens durch ineinandergreifende Profilwalzen;
- kontinuierliches Entfernen von an der gewellten Folie haftendem Öl;

- Applizieren wenigstens einer Haftschicht auf einer ersten Seite der gewellten Folie gemäß Schritt (a);
- Trennen der Folie mit eine vorgebbaren Erstreckung;
- Stapeln mindestens einer glatten Folie und einer gewellten Folie zu einer Struktur;
- zumindest teilweises Einbringen der Struktur in ein Gehäuse;
- Applizieren eines pulverförmigen Lotmaterials zu der wenigstens einen Haftschicht;
- Durchführen einer thermischen Behandlung zur Ausbildung von Lötverbindungen.

Das vorstehend genannte Verfahren eignet sich insbesondere zur Herstellung von Wabenkörpern, die als Trägerkörper in Abgassystemen von Automobilen eingesetzt werden. Die Herstellung erfolgt dabei in Serie, wobei das hier vorgeschlagene kontinuierliche Verfahren sich einfach in bestehende Fertigungsprozesse integrieren lässt.

Bei besonderen Anwendungen kann auch eine zweiseitige Benetzung der gewellten Folie mit Haltmittel vorgenommen werden, wobei z.B. vor dem Trennen der Folien noch folgender Verfahrensschritt durchgeführt wird: Applizieren wenigstens einer Haftschicht auf einer zweiten Seite der gewellten Folie gemäß Schritt (a).

Mit dem hier beschriebenen Verfahren lassen sich die Verbindungsabschnitte in einer bislang nicht bekannten Weise frei gestalten. Die Verbindungsabschnitte können in einer Struktur bzw. in einem Wabenkörper nunmehr nicht nur axial sondern auch radial zueinander versetzt angeordnet werden. Das bedeutet, dass die Verbindungsabschnitte nun entsprechend den thermischen und dynamischen Belastungen des Wabenkörpers im Einsatz gezielter vorgesehen werden können. Gerade bei besonders großvolumigen Wabenkörpern, die beispielsweise als Katalysator-Trägerkörper in Abgassystemen von Lastkraftwagen eingesetzt werden, sind solche versetzte Lötstellen zum Ausgleich von thermischen Differenzdehnungen vorteilhaft. Das gilt vor allem bei Wabenkörper mit Durchmessern in einem Bereich von 150 mm bis 450 mm.

Das hier gegenständliche Verfahren zur Herstellung einer hochtemperaturfesten Struktur wird nachfolgend mit Bezug auf die Figuren näher erläutert. Dabei sei darauf hingewiesen, dass die Figuren besonders bevorzugte Ausgestaltungen des Verfahren beziehungsweise der damit hergestellten Struktur beziehungsweise Halbzeugen davon darstellen, auf die die Erfindung jedoch nicht begrenzt ist. Es zeigen:

Fig. 1    Eine Ausgestaltung einer hochtemperaturfesten Struktur;

Fig. 2    ein Detail der hochtemperaturfesten Struktur in perspektivischer Darstellung;

Fig. 3    eine schematische Darstellung des Auftragens von Haftmitteln mittels Düsen;

Fig. 4    schematisch den Ablauf eines bevorzugten Verfahrens zur Herstellung eines Wabenkörpers.

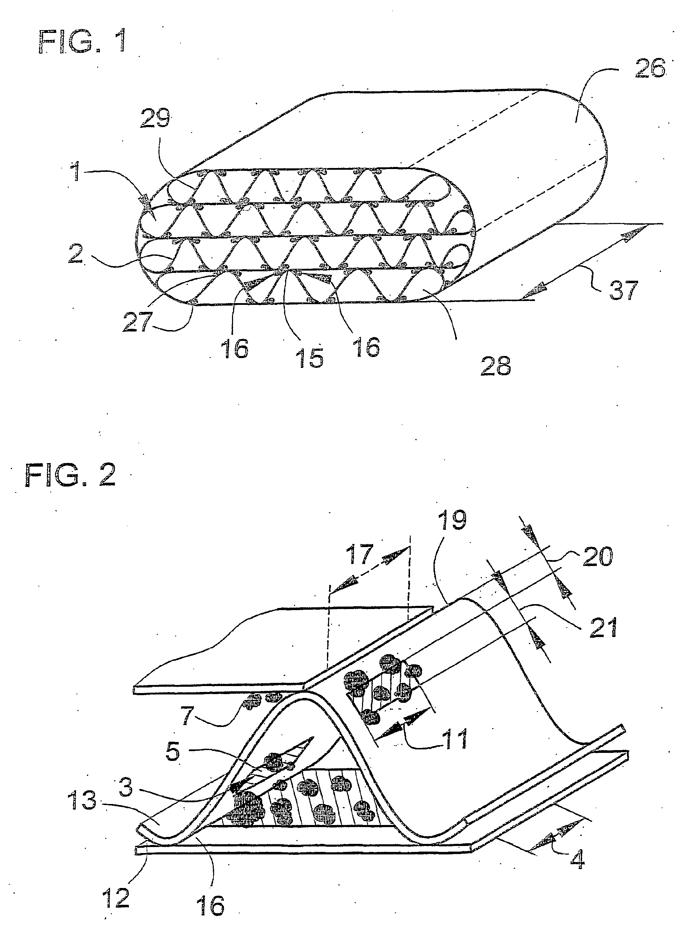

Die Figur 1 zeigt schematisch und in einer perspektivischen Darstellung eine Ausgestaltung einer hochtemperaturfesten Struktur 1, wie sie beispielsweise als Trägerkörper für unterschiedliche Beschichtungen 29 zur Abgasbehandlung im Automobilbau eingesetzt wird. Die Struktur 1 umfasst hier ein Gehäuse 26, in welchem eine teilweise strukturierte Lage 2 aus Metall angeordnet ist. Die Lage 2 weist glatte und strukturierte Teilbereiche auf und ist so gewunden, dass für das Abgas durchströmbare Kanäle 28 gebildet sind. Die glatten Abschnitte der Lage 2 bilden mit der Struktur bzw. Wellung Kontaktstellen 15, nahe denen schließlich die Lötverbindungen 27 ausgestaltet sind. Weitere Lötverbindungen 27 werden zwischen der Lage 2 und dem Gehäuse 26 ausgebildet. Nahe den Kontaktstellen 15 bilden die angrenzenden bzw. aneinanderanliegenden Lagenabschnitte sogenannte Zwickel 16, in denen letztlich die Lötverbindung 27 ausgebildet wird. In der dargestellten Ausführungsform hat die Struktur 2 eine im wesentlichen eine sogenannte "race-track"-Form, grundsätzlich sind aber auch runde, mehreckige oder andere Querschnittsformen möglich. Hier ist die Struktur 1 mit Lagen einer Ausdehnung 37 ausgebildet, die im wesentlichen auch einer Ausdehnung des Gehäuses 26 entspricht, was jedoch nicht zwingend der Fall sein muss. In der dargestellten Ausführungsvariante sind die Lötverbindungen 27 über den Querschnitt der Struktur 2 gleichmäßig verteilt. Grundsätzlich ist es aber möglich und wird durch das hier vorgeschlagene Verfahren besonders einfach realisierbar, die Struktur 1 über den Querschnitt bzw. auch in Richtung der Ausdehnung 37 mit unterschiedlich ausgebildeten Lötverbindungen 27 auszuführen. Dadurch wird ein besonderes thermisches Ausdehnungsverhalten der Struktur 1 bei thermischer Wechselbeanspruchung generiert, welches die Dauerhaltbarkeit der Struktur 1 begünstigen kann.

Figur 2 zeigt nun (ebenfalls in einer schematischen, perspektivischen Darstellung) ein Detail einer Struktur 1, die mit einer glatten Folie 12 und einer gewellten Folie 13 gebildet wird. Dabei sind die glatten Folien 12 und die gewellten Folien 13 abwechselnd zueinander so angeordnet, dass wiederum Kanäle 28 gebildet sind. Die gewellte Folie 13 weist dabei Extrema 19 auf, die schließlich die Kontaktstellen 15 der glatten Folien 12 und der gewellten Folien 13 darstellen. Nahe diesen Extrema 19 sind Zwickel 16 gebildet, in denen später das Lotmaterial 7 angeordnet werden soll, damit es für die anschließende Ausbildung von fügetechnischen Lötverbindungen 27 an den Kontaktstellen vorliegt.

Zur Fixierung des Lotmaterials 7 in den Zwickeln 16 bzw. an anderen gewünschten Stellen bzw. Verbindungsabschnitten 4 werden die Folien mit einer Haftschicht 5 versehen. Die Haftschicht 5 wird mit Haftmittel 3 generiert, welches tropfenförmig appliziert wird. Dadurch lassen sich die Haftschichten 5 entsprechend dem gewünschten Verbindungsabschnitt 4 sehr exakt gestalten. Hier sind überwiegend streifenförmige Haftschichten 5 dargestellt, es können jedoch jede beliebige Form von Haftschichten 5 mit nahezu beliebigen Schichtausdehnungen 11 generiert werden. In der dargestellten Ausführungsvariante wurde die glatte Folie 12 mit einem im wesentlichen quer bzw. senkrecht zum Extremum 19 verlaufenden Haftschicht 5 versehen, wobei diese über mehrere Wellungen der gewellten Folie 13 zusammenhängend ausgebildet ist. Bei der gewellten Folie 13 sind nur sehr schmale Streifen nahe den Zwickeln 16 vorgesehen, wobei diese mit einer Distanz 20 und parallel verlaufend zu den Extrema 19 ausgebildet sind. Die Schichtbreite 21 liegt vorteilhafterweise in einem Bereich kleiner 1 mm.

Bei der Darstellung handelt es sich um ein Detail der Struktur 1, bevor diese der thermischen Behandlung zur Ausbildung fügetechnischer Verbindungen unterzogen wird. Das Lotmaterial 7 ist hier als Pulver bzw. in Körnerform einer vorgegebenen Kornfraktion bereitgestellt, wobei entsprechend den vorbereiteten Haftschichten 5 eine vorgegebene Menge Lotmaterial 7 im Inneren der Struktur haften bleibt. Dadurch lässt sich über eine Länge 17 der Zwickel 16 eine definierte Lotmenge einbringen. Bei einer anschließenden thermischen Behandlung verflüchtigt sich ein Großteil des Haftmittels 3, wobei das Lotmaterial 7, welches nahe den Zwickeln angeordnet ist, die benachbart zueinander angeordneten Folien miteinander verbindet und derart einen dauerhaften Zusammenhalt der Folien gewährleistet.

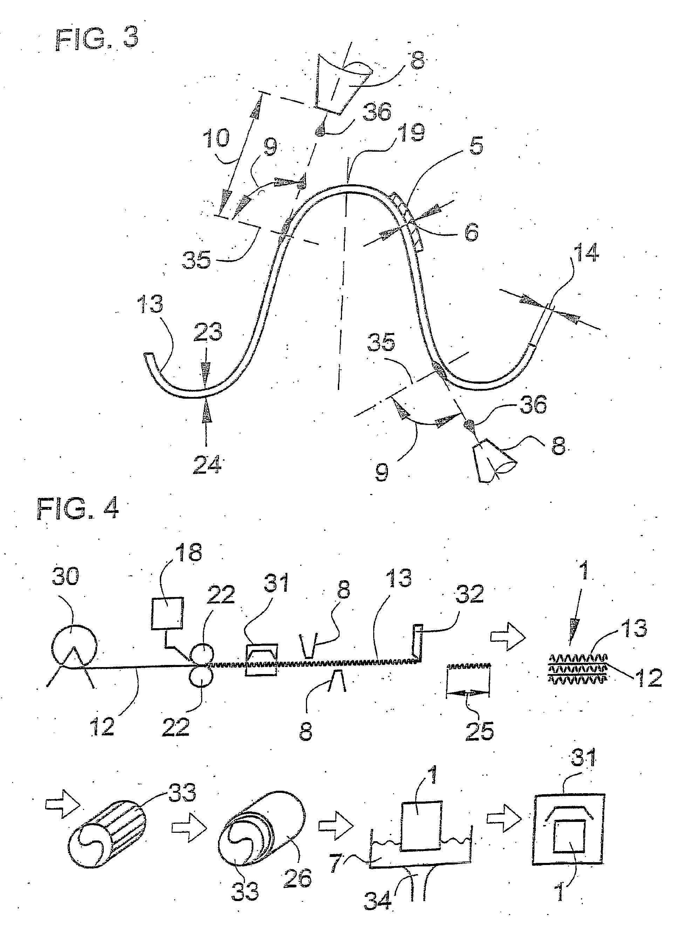

Figur 3 zeigt schematisch das Auftragen des Haftmittels 3 mit einer Düse 8 zur Ausbildung einer Haftschicht 5 mit einer Schichtdicke 6 kleiner 0,01 mm. Das Applizieren des Haftmittels 3 wird hier am Beispiel einer gewellten Folie 13 erläutert. Üblicherweise wird dazu die gewellte Folie 13 relativ zu den dargestellten Düsen 8 bewegt, insbesondere zwischen diesen hindurch geführt. Das ermöglicht, dass zunächst eine Haftschicht 5 auf einer ersten Seite 23 der gewellten Folie 13 generiert wird, während anschließend auch auf der zweiten Seite 24 mittels einer weiteren Düse 8 eine Haftschicht 5 ausgebildet werden kann. Die Menge des Haftmittels 3 bzw. die Ausgestaltung der Haftschicht 5 erfolgt unter Berücksichtigung der letztendlich für die Verbindung gewünschten Lotmittel-Menge, die auch mit Bezug auf die Foliendicke 14 der gewellten Folie 13 gewählt wurde. Um hier eine einfache Anpassung vornehmen zu können, sind die Düsen 8 schwenkbar und/oder relativ bewegbar zu der gewellten Folie 13 ausgebildet. Die Düsen 8 sind bezüglich ihres Strahlwinkels 9 und ihres Abstands 10 veränderbar ausgeführt. Mit Abstand 10 ist dabei wie dargestellt der Abstand der Düsenöffnung bis zum Auftreffpunkt der Tropfen 36 des Haftmittels 3 gemeint. Der Strahlwinkel 9 bestimmt sich durch die Flugrichtung der Tropfen 36 und der Senkrechten 35 durch den Auftreffpunkt auf der gewellten Folie 13 bzw. in dem gewünschten Verbindungsabschnitt 4. Hierbei ist darauf hinzuweisen, dass der Abstand 10 bzw. der Strahlwinkel 9 der beiden Düsen 8 jeweils voneinander unterschiedlich gewählt sein kann.

Figur 4 zeigt schematisch den Ablauf einer bevorzugten Ausgestaltung des Verfahrens zur Herstellung einer hochtemperaturfesten Struktur 1, die eine Mehrzahl glatter Folien 12 und gewellter Folien 13 aufweist. Der Fortlauf des Verfahrens ist durch weiße Pfeile gekennzeichnet, wobei die Figur zeilenweise aufgebaut ist und stets von links nach rechts zu lesen ist. Ausgehend von einer glatten Folie 12, die beispielsweise auf einer Spule 30 bevorratet wird, wird zunächst die gewünschte Wellung in die Folie 12 eingebracht. Hierzu wird die glatte Folie 12 zunächst mit Öl 18 in Kontakt gebracht, unmittelbar bevor die glatte Folie 12 durch ineinandergreifende Profilwalzen 22 hindurchgeführt wird, um den dabei stattfindenden Umformungsprozess zu begünstigen. Im Anschluss an diesen Umformprozess wird die nun gewellte Folie 13 durch einen Ofen 31 hindurchgeführt, wobei sich das an der gewellten Folie 13 haftende Öl 18 wenigstens größtenteils verflüchtigt. Die so gereinigte gewellte Folie 13 wird nun einem System zum Ausbilden der gewünschten Haftmittelschichten zugeführt, was hier durch zwei Düsen 8 symbolisiert wird, die auf beiden Seiten 23, 24 der gewellten Folie 13 angeordnet sind. Zur Ausbildung extrem dünner Haftschichten bzw. besonders präzise positionierter Haftschichten wird das Haftmittel 3 mittels einem Drop-On-Demand-Verfahren, einem Bubble-Jet-Verfahren oder einem Continuous-Jet-Verfahren aufgedruckt, wobei es grundsätzlich auch möglich ist, für jede Düse ein separates Verfahren einzusetzen bzw. mehrere solche Bearbeitungsstationen vorzusehen, die jeweils unterschiedliche Haftschichten ausbilden und auf ein abweichendes Verfahren zurückgreifen. Diese so vorbereitete gewellte Folie 13 wird nun einer Schneidevorrichtung 32 zugeführt, welche die gewellte Folie 13 mit einer vorgebbaren Erstreckung 25 abtrennt. Die so hergestellten gewellten Folien 13 werden mit glatten Folien 12 (beispielsweise von einer anderen Spule 30) abwechselnd zu einer Struktur 1 gestapelt. Dieser Stapel bildet bevorzugt Kanäle 28, die für ein Abgas zumindest teilweise durchströmbar sind.

Dieser Stapel wird nun bei der hier beschriebenen Ausgestaltung des Verfahrens noch S-förmig gewunden, wobei eine im wesentlichen zylindrische Form gebildet ist. Auch derartige Strukturen 1 werden beispielsweise als Wabenkörper 33 bezeichnet. Der so gebildete Wabenkörper 33 bzw. die so gebildete Struktur 1 wird nun in ein Gehäuse 26 integriert. Die Struktur 1 wird nun über die Stirnseite, also beispielsweise auch durch die Kanäle 28 hindurch, mit Lotmittel 7 in Kontakt gebracht. Hier erfolgt dieses Kontaktieren des Lotmittels 7 in Pulverform mittels einem sogenannten Wirbelbett 34, in dem ein Trägermedium (Luft), das Lotmaterial 7 durch die Struktur 1 hindurch befördert. Dabei bleibt die gewünschte Menge Lotmaterial 7 an den zuvor generierten Haftschichten 5 kleben. Der so mit Lotmaterial bestückte Wabenkörper 33 bzw. die so hergestellte Struktur 1 wird nun noch einer thermischen Behandlung unterzogen, die hier wiederum in einem Ofen 31 durchgeführt wird. Dabei handelt es sich bevorzugt um das Hochtemperatur-Vakuum-Löten.

Das hier beschriebene Verfahren eignet sich insbesondere zur Herstellung von thermisch und dynamisch hochbelasteten metallischen Wabenkörpern. Die erzielbare Genauigkeit bezüglich der Ausbildung von Haftschichten und der daraus resultierenden gezielten Einbringung einer gewünschten Lotmenge an gewünschte Positionen erlaubt eine sehr exakte Abstimmung der Lötverbindungen auf das jeweils anzutreffende Einsatzgebiet. Insbesondere ist es möglich, sehr definiert das thermische und dynamische Verhalten der Struktur bzw. des Wabenkörpers auf Druck und Temperatur zu bestimmen. Dadurch wird insbesondere die Lebensdauer derartiger Strukturen in Abgassystemen von Automobilen verlängert bzw. die Produktion wird kostentechnisch effizienter gestaltet, da jeweils nur soviel Lotmaterial eingebracht wird, wie dies tatsächlich für die Verbindung erforderlich ist.

Bezugszeichenliste

| 1 | Struktur |
| 2 | Lage |
| 3 | Haftmittel |
| 4 | Verbindungsabschnitt |
| 5 | Haftschicht |
| 6 | Schichtdicke |
| 7 | Lotmaterial |
| 8 | Düse |
| 9 | Strahlwinkel |
| 10 | Abstand |
| 11 | Schichtausdehnung |
| 12 | glatte Folie |
| 13 | gewellte Folie |
| 14 | Foliendicke |
| 15 | Kontaktstelle |
| 16 | Zwickel |
| 17 | Länge |
| 18 | Öl |
| 19 | Extremum |
| 20 | Distanz |
| 21 | Schichtbreite |
| 22 | Profilwalze |
| 23 | Erste Seite |
| 24 | Zweite Seite |
| 25 | Erstreckung |
| 26 | Gehäuse |
| 27 | Lötverbindung |
| 28 | Kanal |
| 29 | Beschichtung |
| 30 | Spule |
| 31 | Ofen |
| 32 | Schneidevorrichtung |
| 33 | Wabenkörper |
| 34 | Wirbelbett |
| 35 | Senkrechte |
| 36 | Tropfen |
| 37 | Ausdehnung |

**Patentansprüche**

1.  Verfahren zur Herstellung einer hochtemperaturfesten Struktur (1) umfassend mindestens eine wenigstens teilweise strukturierte metallische Lage (2) mit zumindest den folgenden Schritten:

    (a) Auftragen eines Haftmittels (3) auf wenigstens einen Verbindungsabschnitt (4) der mindestens einen Lage (2), wobei das Haftmittel (3) zur Ausbildung einer Haftschicht (5) tropfenförmig appliziert wird;
    (b) Zumindest teilweises Formen der Struktur (1);
    (c) Applizieren eines Lotmaterials (7), so dass dieses zumindest teilweise an der Haftschicht (5) fixiert wird;
    (d) Durchführen einer thermischen Behandlung, wobei Schritt (c) nach Schritt (a) durchgeführt wird

    **dadurch gekennzeichnet, dass** eine Schichtdicke (6) der Haftschicht (5) kleiner 0,05 mm bereitgestellt wird

2.  Verfahren nach Anspruch 1, bei dem das Haftmittel (3) mittels einem der nachfolgenden Verfahren aufgedruckt wird:

    - Drop-on-Demand-Verfahren;
    - Bubble-Jet-Verfahren;
    - Continuous-Jet-Verfahren.

3.  Verfahren nach Anspruch 1 oder 2, bei dem das Haftmittel (3) statisch aufladbar ist und bevorzugt eine elektrische Leitfähigkeit aufweist, die größer 1,0 mS beträgt.

4.  Verfahren nach einem der vorangegangenen Ansprüche, bei dem das Haftmittel (3) eine dynamische Viskosität im Bereich von 3,0 bis 5,0 mPa aufweist.

5.  Verfahren nach einem der vorangegangenen Ansprüche, bei dem das Haftmittel (3) einen Lösungsmittelanteil hat, der mindestens 50% beträgt.

6.  Verfahren nach einem der vorangegangenen Ansprüche, bei dem das Haftmittel (3) einen Klebstoffanteil hat, der bis mindestens 300 °C beständig ist.

7. Verfahren nach einem der vorangegangenen Ansprüche, bei dem die Struktur (1) vor dem Applizieren des Lotmaterials (7) einer thermischen Vorbehandlung unterzogen wird.

8. Verfahren nach einem der vorangegangenen Ansprüche, bei dem das Haftmittel (3) mit mindestens einer Düse (8) appliziert wird, wobei die mindestens eine Düse (8) einen Strahlwinkel (9) vorgibt und einen Abstand (10) zum Verbindungsabschnitt (4) aufweist, wobei zur Ausbildung einer Haftschicht (5) mindestens einer der Parameter Strahlwinkel (9) und Abstand (10) so variiert wird, dass die Haftschicht (5) mit einer vorgegebenen Schichtdicke (6) und/oder Schichtausdehnung (11) erzeugt wird.

9. Verfahren nach einem der vorangegangenen Ansprüche, bei dem das Lotmaterial (7) als Pulver mit einer Kornfraktion kleiner 120 µm appliziert wird.

10. Verfahren nach einem der vorangegangenen Ansprüche, bei dem die Struktur (1) mit mindestens einer glatten Folie (12) und einer gewellten Folie (13) einer vorgegebenen Foliendicke (14) gebildet wird, welche miteinander Kontaktstellen (15) mit Zwickeln (16) formen, wobei eine Menge Lotmaterial (7) appliziert wird, die in Abhängigkeit der Foliendicke (14) in einem Zwickel (16) mindestens folgendem Zusammenhang entspricht:

$$m_{Lot} = \delta_{Lot} \cdot \frac{d_{Lot}^2 \cdot s}{2} \cdot \frac{l}{d_{Lot}};$$

mit

$m_{Lot}$: erforderliche Lotmasse,
$\delta_{Lot}$: Lotmaterialdichte,
$d_{Lot}$: gemittelter Durchmesser des pulverförmige Lotmaterials,
s: Foliendicke,
l: Länge des Haftmittelstreifens.

11. Verfahren nach einem der vorangegangenen Ansprüche, wobei die Struktur (1) mit mindestens einer glatten Folie (12) und einer gewellten Folie (13) gebildet wird, wobei die mindestens eine gewellte Folie (13) mittels einem formgebenden Walz-Verfahren unter Einsatz eines Öls (18) hergestellt wird, bei dem die hergestellte gewellte Folie (13) entölt wird, bevor das Haftmittel (3) aufgetragen wird.

12. Verfahren nach einem der vorangegangenen Ansprüche, wobei die Struktur (1) mit mindestens einer glatten Folie (12) und einer gewellten Folie (13) gebildet wird und die gewellte Folie (13) Extrema (19) aufweist, bei dem neben mindestens einem Extremum (19) verlaufend, zumindest eine Haftschicht (5) mit einer Distanz (20) von mindestens 0,05 mm erzeugt wird.

13. Verfahren nach Anspruch 12, bei dem die Haftschicht (5) eine Schichtbreite (21) kleiner 0,9 mm hat.

14. Verfahren nach einem der vorangegangenen Ansprüche, wobei die Struktur (1) mit mindestens einer glatten Folie (12) und einer gewellten Folie (13) gebildet wird und die gewellte Folie (13) Extrema (19) aufweist, bei dem zumindest die Anzahl oder die Lage der Extrema (19) erfasst werden.

15. Verfahren nach einem der vorangegangenen Ansprüche, wobei die Struktur (1) mit mindestens einer glatten Folie (12) und einer gewellten Folie (13) gebildet wird, bei dem folgende Schritte durchgeführt werden:

- kontinuierliches Erzeugen einer Wellung in eine glatte Folie (12) infolge Hindurchführens durch ineinander greifende Profilwalzen (22);
- kontinuierliches Entfernen von an der gewellten Folie (13) haftendem Öl (18);
- Applizieren wenigstens einer Haftschicht (5) auf einer ersten Seite (23) der gewellten Folie (13) gemäß Schritt (a);
- Trennen der Folie (12, 13) mit einer vorgebbaren Erstreckung (25);
- Stapeln mindestens einer glatten Folie (12) und einer gewellten Folie (13) zu einer Struktur (1);
- Zumindest teilweises Einbringen der Struktur (1) in ein Gehäuse (26);
- Applizieren eines pulverförmigen Lotmaterials (7) zu der wenigstens einen Haftschicht (5);
- Durchführen einer thermischen Behandlung zur Ausbildung von Lotverbindungen (27).

## Claims

1. Process for producing a structure (1) which is able to withstand high temperatures and comprises at least one at least partially structured metallic sheet (2), the process involving at least the following steps:

(a) applying a bonding agent (3) to at least one joining portion (4) of the at least one sheet (2), the bonding agent (3), in order to form a bonding layer (5), being applied in drop form;
(b) at least partially shaping the structure (1);
(c) applying a solder/brazing material (7), so that the latter is at least partially fixed to the bonding layer (5);

(d) carrying out a heat treatment,
wherein step (c) is conducted after step (a), **characterized in that** a layer thickness (6) of the bonding layer (5) of less than 0.05 mm is provided.

**2.** Process as claimed in claim 1, in which the bonding agent (3) is printed on by means of one of the following processes:

- drop-on-demand process;
- bubble jet process;
- continuous jet process.

**3.** Process as claimed in claim 1 or 2, in which the bonding agent (3) can be statically charged and preferably has an electrical conductivity which is greater than 1.0 mS.

**4.** Process as claimed in one of the preceding claims, in which the bonding agent (3) has a dynamic viscosity in the range from 3.0 to 5.0 mPa.

**5.** Process as claimed in one of the preceding claims, in which the bonding agent (3) has a solvent content amounting to at least 50%.

**6.** Process as claimed in one of the preceding claims, in which the bonding agent (3) has an adhesive content which is stable up to at least 300°C.

**7.** Process as claimed in one of the preceding claims, in which the structure (1) is subjected to a heat pretreatment prior to the application of the solder material (7).

**8.** Process as claimed in one of the preceding claims, in which the bonding agent (3) is applied using at least one nozzle (8), the at least one nozzle (8) predetermining a jet angle (9) and being at a spacing (10) from the joining portion (4), with at least one of the parameters out of jet angle (9) and spacing (10), in order to form a bonding layer (5), being varied in such a way that the bonding layer (5) is produced with a predetermined layer thickness (6) and/or layer extent (11).

**9.** Process as claimed in one of the preceding claims, in which the solder material (7) is applied as a powder with a grain size fraction of less than 120 $\mu$m.

**10.** Process as claimed in one of the preceding claims, in which the structure (1) is formed using at least one smooth foil (12) and at least one corrugated foil (13) of a predetermined foil thickness (14), which foils form contact locations (15) with one another, these contact locations having pockets (16), with a quantity of solder material (7) being applied, which, as a function of the foil thickness (14) in a pocket (16), corresponds at least to the following relationship:

$$m_{Lot} = \delta_{Lot} \cdot \frac{d_{Lot}^2 \cdot s}{2} \cdot \frac{l}{d_{Lot}};$$

where

$m_{Solder}$: mass of solder required,
$\delta_{Solder}$: solder material density,
$d_{Solder}$: mean diameter of the solder material in powder form,
s: foil thickness,
l: length of the strip of bonding agent.

**11.** Process as claimed in one of the preceding claims, in which the structure (1) is formed using at least one smooth foil (12) and at least one corrugated foil (13), the at least one corrugated foil (13) being produced by means of a shaping rolling process using an oil (18), with the oil being removed from the corrugated foil (13) produced before the bonding agent (3) is applied.

**12.** Process as claimed in one of the preceding claims, in which the structure (1) is formed using at least one smooth foil (12) and at least one corrugated foil (13), and the corrugated foil (13) has extremes (19), with at least one bonding layer (5) being produced running next to at least one extreme (19), at a distance (20) of at least 0.05 mm.

**13.** Process as claimed in claim 12, in which the bonding layer (5) has a layer width (21) of less than 0.9 mm.

**14.** Process as claimed in one of the preceding claims, in which the structure (1) is formed using at least one smooth foil (12) and at least one corrugated foil (13), and the corrugated foil (13) has extremes (19), with at least the number or position of the extremes (19) being recorded.

**15.** Process as claimed in one of the preceding claims, in which the structure (1) is formed using at least one smooth foil (12) and at least one corrugated foil (13), with the following steps being carried out:

- continuously producing a corrugation in a smooth foil (12) by passing it through profile rollers (22) which engage with one another;
- continuously removing oil (18) adhering to the corrugated foil (13);
- applying at least one bonding layer (5) to a first side (23) of the corrugated foil (13) in accordance with step (a);
- cutting the foil (12, 13) at predeterminable intervals (25);
- stacking at least one smooth foil (12) and at least one corrugated foil (13) to form a structure (1);
- at least partially introducing the structure (1) into a housing (26);
- applying a solder material (7) in powder form to the at least one bonding layer (5);
- carrying out a heat treatment in order to form solder joins (27).

**Revendications**

1. Procédé pour la préparation d'une structure (1) résistant aux températures élevées comprenant au moins une couche métallique (2) au moins partiellement structurée présentant au moins les étapes suivantes :

   (a) application d'un autoadhésif (3) sur au moins une section de liaison (4) de ladite au moins une couche (2), l'autoadhésif (3) étant appliqué sous forme de gouttes pour la formation d'une couche autoadhésive (5) ;
   (b) façonnage au moins partiel de la structure (1) ;
   (c) application d'une matière de brasage (7) de telle sorte que celle-ci est fixée au moins partiellement sur la couche autoadhésive (5) ;
   (d) réalisation d'un traitement thermique, l'étape (c) étant réalisée après l'étape (a), **caractérisé en ce qu'**on réalise une épaisseur de couche (6) de la couche autoadhésive (5) inférieure à 0,05 mm.

2. Procédé selon la revendication 1, dans lequel l'autoadhésif (3) est imprimé au moyen d'un des procédés suivants :

   - le procédé par goutte à la demande ;
   - le procédé par bulle d'encre ;
   - le procédé à jet d'encre en continu.

3. Procédé selon la revendication 1 ou 2, dans lequel l'autoadhésif (3) peut être chargé statiquement et présente de préférence une conductibilité électrique qui est supérieure à 1,0 mS.

4. Procédé selon l'une quelconque des revendications précédentes, dans lequel l'autoadhésif (3) présente une viscosité dynamique dans la plage de 3,0 à 5,0 mPa.

5. Procédé selon l'une quelconque des revendications précédentes, dans lequel l'autoadhésif (3) présente une proportion de solvant qui est d'au moins 50 %.

6. Procédé selon l'une quelconque des revendications précédentes, dans lequel l'autoadhésif (3) présente une proportion d'adhésif qui résiste à jusqu'à au moins 300°C.

7. Procédé selon l'une quelconque des revendications précédentes, dans lequel la structure (1) est soumise à un prétraitement thermique avant l'application de la matière de brasage (7).

8. Procédé selon l'une quelconque des revendications précédentes, dans lequel l'autoadhésif (3) est appliqué à l'aide d'au moins une buse (8), ladite au moins une buse (8) fixant un angle (9) du jet et présentant une distance (10) par rapport à la section de liaison (4), au moins un des paramètres parmi l'angle (9) du jet et la distance (10) étant variés pour la réalisation d'une couche adhésive (5) de manière telle que la couche autoadhésive (5) est produite à une épaisseur de couche (6) et/ou une taille de couche (11) fixées.

9. Procédé selon l'une quelconque des revendications précédentes, dans lequel la matière de brasage (7) est appliquée sous forme de poudre présentant une fraction granulométrique inférieure à 120 $\mu$m.

10. Procédé selon l'une quelconque des revendications précédentes, dans lequel la structure (1) est formée à l'aide d'au moins une feuille lisse (12) et une feuille ondulée (13) d'une épaisseur de feuille (14) fixée, qui forment l'une avec l'autre des sites de contact (15) avec des soufflets (16), une quantité de matière de brasage (7) étant appliquée qui correspond au moins à la relation suivante en fonction de l'épaisseur de feuille (14) dans un soufflet (16) :

$$m_{Lot} = \delta_{Lot} \cdot \frac{d_{Lot}^2 \cdot s}{2} \cdot \frac{l}{d_{Lot}};$$

où

   $m_{Lot}$ : masse de brasage nécessaire,
   $\delta_{Lot}$ : densité de la matière de brasage,
   $d_{Lot}$ : diamètre moyen de la matière de brasage en forme de poudre,
   $s$ : épaisseur de feuille,
   $l$ : longueur de la bande d'autoadhésif.

11. Procédé selon l'une quelconque des revendications précédentes, la structure (1) étant formée à l'aide d'au moins une feuille lisse (12) et une feuille ondulée (13), ladite au moins une feuille ondulée (13) étant réalisée au moyen d'un procédé de laminage conférant une forme avec utilisation d'une huile (18), dans lequel la feuille ondulée réalisée (13) est déshuilée avant l'application de l'autoadhésif (3).

12. Procédé selon l'une quelconque des revendications précédentes, la structure (1) étant formée à l'aide d'au moins une feuille lisse (12) et une feuille ondulée (13) et la feuille ondulée (13) présentant des sommets (19), dans lequel on forme au moins une couche autoadhésive (5) s'étendant à côté d'au moins un sommet (19) à une distance (20) d'au moins 0,05 mm.

13. Procédé selon la revendication 12, dans lequel la couche adhésive (5) présente une largeur de couche (21) inférieure à 0,9 mm.

14. Procédé selon l'une quelconque des revendications précédentes, la structure (1) étant formée à l'aide d'au moins une feuille lisse (12) et une feuille ondulée (13) et la feuille ondulée (13) présentant des sommets (19), dans lequel on enregistre au moins le nombre ou la position des sommets (19).

15. Procédé selon l'une quelconque des revendications précédentes, la structure (1) étant formée à l'aide d'au moins une feuille lisse (12) et une feuille ondulée (13), dans lequel on réalise les étapes suivantes :

> - production continue d'une ondulation dans une feuille lisse (12) suite au passage au travers de cylindres profilés (22) s'engrenant l'un dans l'autre ;
> - élimination continue de l'huile (18) qui adhère à la feuille ondulée (13) ;
> - application d'au moins une couche autoadhésive (5) sur une première face (23) de la feuille ondulée (13) selon l'étape (a) ;
> - séparation de la feuille (12, 13) avec une dimension (25) pouvant être fixée ;
> - empilement d'au moins une feuille lisse (12) et d'une feuille ondulée (13) en une structure (1) ;
> - introduction au moins partielle de la structure (1) dans un logement (26) ;
> - application d'une matière de brasage (7) en forme de poudre sur ladite au moins une couche autoadhésive (5) ;
> - réalisation d'un traitement thermique pour réaliser des assemblages par brasage (27).

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1603560 B1
- DE 2902779 A1
- EP 0245737 B1
- WO 9003220 A
- EP 0422000 B2
- DE 10151487 C1
- EP 0820830 A